Europäisches Patentamt

European Patent Office

Office européen des brevets

(11) Publication number: 0 661 639 A1

# EUROPEAN PATENT APPLICATION

(21) Application number: 94309405.2

(22) Date of filing: 15.12.94

(51) Int. Cl.6: G06F 12/08, G06F 11/10

(30) Priority: 30.12.93 US 175812

(43) Date of publication of application:
05.07.95 Bulletin 95/27

(84) Designated Contracting States:
DE FR GB

(71) Applicant: INTERNATIONAL BUSINESS
MACHINES CORPORATION
Old Orchard Road
Armonk, N.Y. 10504 (US)

(72) Inventor: Islam, Shah Mohammad Rezaul
3380 Jaywood Terrace,
Apt. J226
Boca Raton,
Florida 33431 (US)
Inventor: Ng, Spencer Wah-Fung
974 Hampswood Way
San Jose,
California 95120 (US)

(74) Representative: Litherland, David Peter
IBM United Kingdom Limited
Intellectual Property Department
Hursley Park
Winchester,
Hampshire SO21 2JN (GB)

(54) Data prefetch in mass data storage systems.

(57) A mass storage device comprises a plurality of disk storage devices configured as an array eg a RAID level 4 or RAID level 5 system. Reading, writing and modifying data on a RAID level 4 or 5 system provides for caching of old user and parity data. Responsive to receiving an exogenously generated write request, it is determined if the location to which the write command is directed has data duplicated in cache. If not, the data, and associated parity data, are fetched from the appropriate drives preparatory to recalculation of RAID parity data. Data encountered during a rotational latency period between the reads and the subsequent writes to the same sectors is cached for use with possible subsequent write command.

Fig. 4

The present invention relates to mass storage devices comprising a plurality of disk drives configured as an array. In particular, the invention relates the prefetching of data and parity information for write operations in such a mass storage device.

Use of disk memory continues to be important in computers because it is nonvolatile and because memory size demands continue to outpace practical amounts of main memory. At this time, disks are slower than main memory so that system performance is often limited by disk access speed. Therefore, it is important for overall system performance to improve both memory size and data access speed of disk drive units. For a discussion of this, see Michelle Y. Kim, "Synchronized Disk Interleaving", *IEEE Transactions On Computers*, Vol. C-35, No. 11, November 1986.

Disk memory size can be increased by increasing the number of disks and/or increasing the diameters of the disks, but this does not increase data access speed. Memory size and data transfer rate can both be increased by increasing the density of data storage. However, technological constraints limit data density and high density disks are more prone to errors.

A variety of techniques have been utilized to improve data access speed. Disk cache memory capable of holding an entire track of data has been used to eliminate seek and rotation delays for successive accesses to data on a single track. Multiple read/write heads have been used to interleave blocks of data on a set of disks or on a set of tracks on a single disk. Common data block sizes are byte size, word size, and sector size. Disk interleaving is a known supercomputer technique for increasing performance, and is discussed, for example, in the above-noted article.

Data access performance can be measured by a number of parameters, depending on the relevant application. In transaction processing (such as in banking) data transfers are typically small and request rates are high and random. In supercomputer applications, on the other hand, transfers of large data blocks are common.

A recently developed disk memory structure with improved performance at relatively low cost is the Redundant Array of Inexpensive Disks (RAID) (see, for example, David A. Patterson, et al., "A Case for Redundant Arrays of Inexpensive Disks (RAID)", Report No. UCB/CSD 87/89, December, 1987, Computer Science Division (EECS), University of California, Berkeley, California 94720. As discussed in the Patterson et al. reference, the large personal computer market has supported the development of inexpensive disk drives having a better ratio of performance to cost than Single Large Expensive Disk (SLED) systems. The number of I/Os per second per read/write head in an inexpensive disk is within a factor of two of the large disks. Therefore, the parallel transfer from several inexpensive disks in a RAID architecture, in which a set of inexpensive disks function as a single logical disk drive, produces greater performance than a SLED at a reduced price.

Unfortunately, when data is striped to more than one disk, the mean time to failure varies inversely with the number of disks in the array. To correct for this decreased mean time to failure of the system, error recognition and correction is built into the RAID systems. The Patterson et al. reference discusses 5 RAID embodiments each having a different means for error recognition and correction. These RAID embodiments are referred to as RAID levels 1-5.

RAID level 1 utilizes complete duplication of data (sometimes called "mirroring") and so has a relatively small performance advantage per disk ratio over a conventional disk. RAID level 2 improves this performance as well as the capacity per disk ratio by utilizing error correction codes that enable a reduction of the number of extra disks needed to provide error correction and disk failure recovery. In RAID level 2, data is interleaved onto a group of G data disks and error codes are generated and stored onto an additional set of C disks referred to as "check disks" to detect and correct a single error. This error code detects and enables correction of random single bit errors in data and also enables recovery of data if one of the G data disks crashes. Since only G of the C + G disks carries user data, the performance per disk is proportional to G/(G + C). G/C is typically significantly greater than 1, so RAID level 2 exhibits an improvement in performance per disk over RAID level 1. One or more spare disks can be included in the system so that if one of the disk drives fails, the spare disk can be electronically switched into the RAID to replace the failed disk drive.

RAID level 3 is a variant of RAID level 2 in which the error detecting capabilities that are provided by most existing inexpensive disk drives are utilized to enable the number of check disks to be reduced to one, thereby increasing the relative performance per disk over that of RAID level 2. Parity instead of error correcting codes are employed on the check disk.

The performance criteria for small data transfers, such as is common in transaction processing, is known to be poor for RAID levels 1-3 because data is interleaved among the disks in bit-sized or byte-sized blocks, such that even for a data access of less than one sector of data, all disks must be accessed. To improve this performance parameter, in RAID level 4, a variant of RAID level 3, data is interleaved onto the disks in sector interleave mode instead of in bit or byte interleave mode as in levels 1-3. The benefit of this is that, for small data accesses (i.e., accesses smaller than G + C sectors of data), not all disks need be accessed. This in turn allows independent parallel read accesses to an array of drives and reduces the amount of competition among separate data access requests to access the same data disk at the same time.

Yet the performance of RAID level 4 remains limited because of access contention for the check disk during write operations. For all write operations, the check disk must be accessed in order to store updated parity data on the check disk for each stripe (i.e., row of sectors) of data into which data is written. Patterson et al. observed that in RAID level 4 and level 5, an individual write to a single sector does not involve all of the disks in a logical mass storage device since the parity bits on the check disk is just a single exclusive OR of all the corresponding data bits in a group. In RAID level 4, write operations always involve reading from and writing to the parity drive, making it the bottleneck in the array. RAID level 5, a variant of RAID level 4, mitigates the contention problem on write operations by distributing the parity check data and user data across all disks.

Both RAID level 4 and 5 require, with each read-modify-write operation, 4 accesses to locations on 2 disks. Each such operation involves one read access of the user data and the parity check data followed by a write of new user data and modified parity data. The two read accesses are required to recalculate the parity, which is determined using the following function:

new parity = (old data .XOR. new data) .XOR. old parity.

Adverse consequences relating to performance stem from the rotational latency between successive read and write accesses on the same section of each disk involved with the update, which necessarily require a complete rotation of the disk since the new user data and the modified parity data are written to the same sectors from which the old user data and old parity data were read.

The present invention seeks to ameliorate the performance disadvantages of prior systems and accordingly provides, when viewed from a first aspect, a mass storage device for a data processing system, comprising: a plurality N disk drives operable as a logical unit each drive including at least one data recording disk comprising a plurality of tracks divided into sectors for storing data, wherein a group of sectors comprise at least one sector of user data from each of N-1 of the N disk drives and at least one sector on one of the N disk drives for storing parity data generated across the user data stored on the group of sectors; and a storage controller connected to the disk drives, responsive to an exogenous command to write user data to at least a first designated sector in the group of sectors for reading existing user data from all sectors on the track including the designated sector and existing parity data from all sectors on a track on a disk drive including a sector belonging to the group of sectors.

Viewed from a second aspect, the present invention provides a method of reading, writing and modifying data on a plurality of disk drives operating as a logical unit, comprising receiving an exogenous write request; responsive to the write request, reading data from a sector on a first disk drive; further responsive to the write request, reading parity data from a sector on a second disk drive; calculating new parity data from data received with the write request, the data read from the first disk drive and the parity data; during a rotational latency period between successive accesses of the sector on the first disk drive and the sector on the second disk drive, prefetching data and parity data from the first and second disk drives respectively; upon conclusion of the rotational latency period, writing the data received with the write request and the new parity data to the first and second disk drives, respectively; and retaining the prefetched data and redundant data for use in calculating new parity data for a subsequent read-write-modify operation.

Thus, the present invention exploits the period of rotational latency between a required read from and write to a sector to prefetch data on the track of the sector to support possible later write operations.

Thus in a preferred embodiment, which will be described in greater detail below, there is provided a method of reading, writing and modifying data on a plurality of disk drives operating as a logical unit. Responsive to receiving an exogenously generated write request, it is determined if the location associated with the write command has data present in cache. If data are in cache, updated parity data may be calculated using the data in cache. It is further determined if parity data associated with the location to be rewritten are in cache. If so, they too are used in the calculating step for the replacement parity data. The data received with the write command and the replacement parity data are then written to the cache locations and to their respective disk locations. If the data or parity data were not in cache they are read from disk. Following a read of a sector from disk, all subsequent sectors in the same track are also read from disk and cached for possible later use upon a subsequent write request.

A preferred embodiment of the invention will now be described, by way of example only, with reference to the accompanying drawings in which:

Figure 1 is a high level block diagram of a data processing system including a redundant array of inexpensive disks;

Figure 2 is a top plan view of a disk drive showing the arrangement of data tracks thereon;

Figure 3 is a schematic view of the organization of data a plurality of disk drives applied to a RAID level 5 system; and

Figure 4 is a high level logical flow chart of a process for implementing the invention of caching user and parity data.

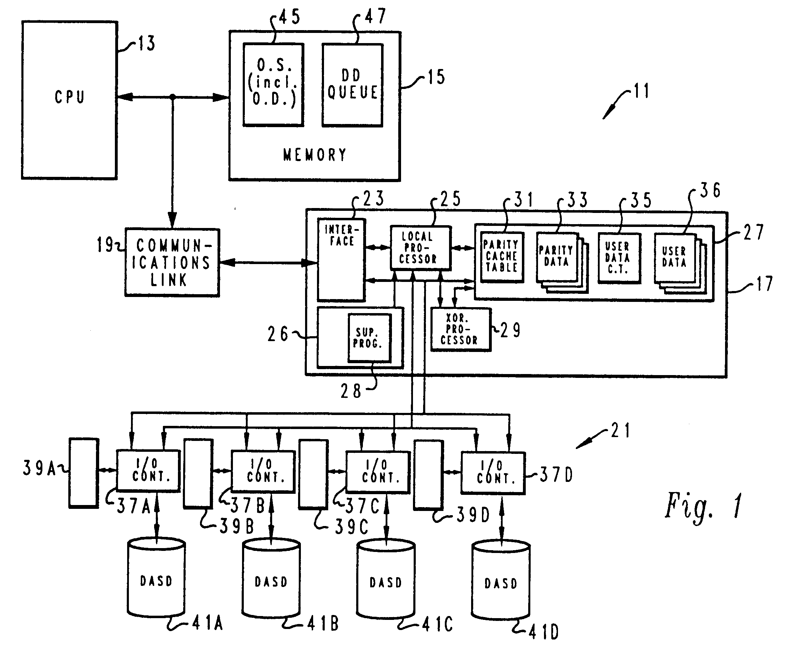

With reference now to the figures and in particular with reference to Figure 1, there is depicted a data processing system 11. Data processing system 11 includes a system central processing unit 13, a system memory 15, a mass storage controller 17 and a communications link 19 linking the CPU 13, memory 15 and mass storage controller 17 for interchange of data and commands. Communications link 19 may be a system bus or it may represent some type of network.

Mass storage controller 17 provides for striping data blocks to and recovering data blocks from a redundant array of inexpensive disks 21. The present invention applies to utilizations of redundant array 21 in a RAID level 4 or level 5 mode. Mass storage controller 17 comprises an interface 23 to communications link 19. Interface 23 may be a SCSI (small computer systems interface) connection or a network adaptor into communications link 19. Local processor 25 takes data received over communications link 19 on interface 23 and organizes the data for striping among a plurality of direct access storage devices within the redundant array of inexpensive disks 21. Connected between local processor 25 and cache buffer 27 is an exclusive OR processor 29. Exclusive OR processor 29 is utilized to generate parity data over data stripes.

Various types of data may be stored in cache buffer 27 including a parity cache table 31, blocks of parity data 33, a user data cache table 35 and blocks of user data 36. User data may be cached to improve system read performance, but is provided here for quick access during a write operation to support recalculation of parity. Local processor 25 is also used to implement a process for caching user and parity data within buffer 27.

Parity and user data cache tables 31 and 35 each include a plurality of entries which, when in use, identify an address range on the disks of a series of sectors, a location in buffer 27 to find a copy of the data stored at the identified address and a time stamp indicating last use. The time stamp supports implementation of a Least Recently Used (LRU) algorithm used to free cache buffer 27 locations for use if all allocated locations have been used. Of course, some other system of freeing buffer 27 locations may be used. Parity and user data cache tables 31 and 35 are presented as separate data structures for intuitive clarity. In practice the tables may be part of a single data structure.

Local processor 25 accesses nonvolatile storage 26 for a supervisor program 28 which includes a routine for maintaining and using cached parity and user data blocks 33 and 36 in buffer 27. Alternatively, the supervisor program may be stored in a disk file stored on one or more of disk drives 41A-41D and transferred to RAM upon power up.

Local processor also recovers and reorganizes data from redundant array 21, for return over interface 23 to computational units of data processing system 11. Upon receipt over communications link 19 data are passed from mass storage controller 17 to redundant array 21 through a plurality of input/output controllers 37a through 37d. Each of input/output controllers 37a-d has access to a local buffer 39a-39d respectively and controls a direct access storage device (DASD) or disk drive 41a-41d respectively.

Memory 15, for a computer based data processing system 11, will include an operating system 45 which in turn includes a plurality of device drivers including a device driver for a logical storage device implemented by mass storage controller 17. Also maintained within memory 15 is a device driver queue of tagged commands which have been sent by CPU 13 to mass storage controller 17 for execution.

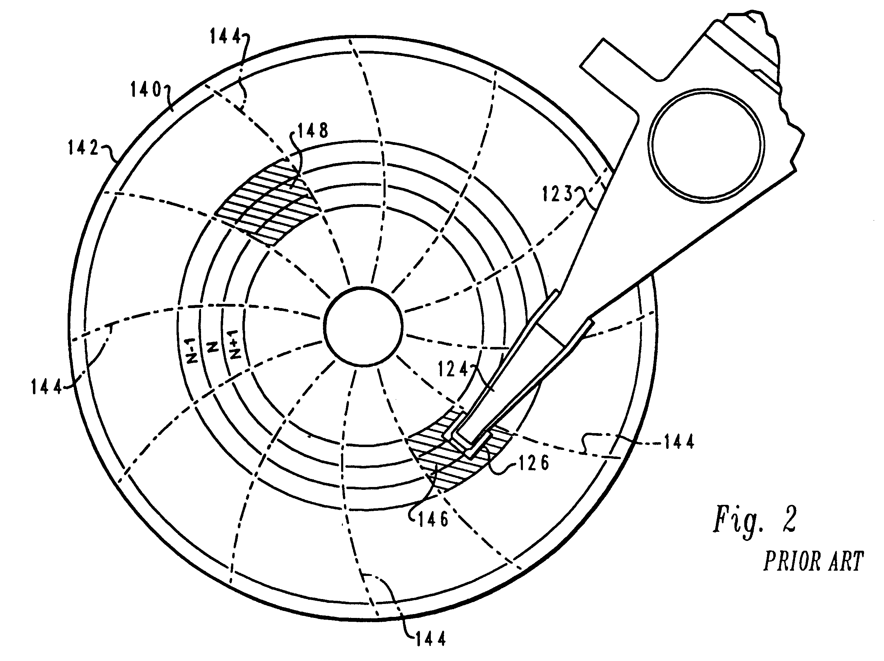

Figure 2 is a top plan view of a known type of disk drive 120, and is used to illustrate certain aspects of disk drive operation useful to understanding the invention. Positioning of slider 126 by an arm 123 over one of a plurality of tracks (1 to N+1) on a magnetic surface of 140 of a disk 142 is done to read data from or to write data to sectors such as sectors 146 and 148 on the track. Each track is divided into segments or sectors by a plurality of track servo fields 144 extending radially from the center of disk 140. Track servo fields curve to conform to the travel of slider 126 at the end of rotatable arm 123. If disk rotational speed is constant (i.e. constant angular velocity "CAV"), a transducer mounted to slider 126 encounters a track servo field 144 at strict intervals of times notwithstanding movement of the slider from track to track. Tracking information is derived from servo fields 144 in a manner well known in the art. Slider 126 flies blind between servo fields. When user data or parity data is updated on disk 120, the old data may be read from and the replacement data is always written to a predefined location. For example, if sector 146 contains either user or parity data, they are read on a first rotation and the updated data is written to back to the same sector on a second or later rotation. A delay corresponding to at least one rotation (delays due to the need to wait for rotation to bring a sector under the read-write transducer are termed "latency" delays) is incurred between a read and a write done on a sector. In the prior art, access to a disk where parity data is stored cannot be permitted during this period. Access to the drive is locked out which adversely affects drive performance.

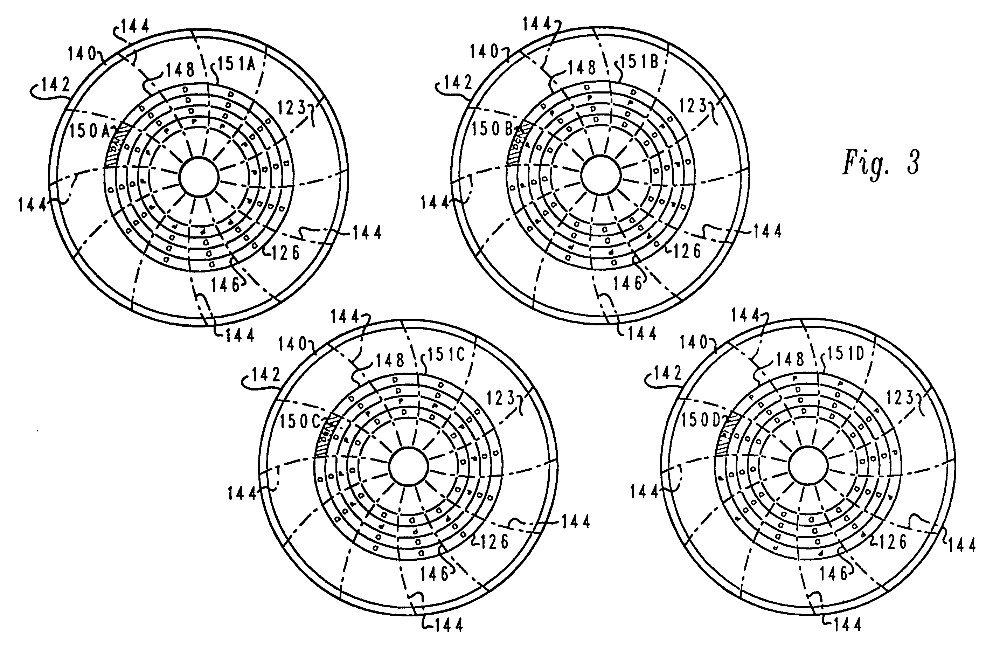

Figure 3 is a schematic illustration of the distribution of data on disk drives in a RAID level 5 application. Parity data (P) and user data (D) are segregated by tracks on each drive. A given stripe 150A, 150B, 150C and 150D, consists of 3 user data and one parity data sectors, located at corresponding physical locations on each of the four disk drives. A RAID level 4 stripe would look the same. On level 4 implementations, user and parity data are segregated by disk drive. Each user data block 150A-C, and a parity data block 150D, is also in a track 151A-D. Upon modification of a data block, a read of the data block and the parity block from the same stripe is performed preparatory to recalculation of the parity as provided above. The invention provides for caching all of the remaining sectors on the tracks where the user and parity data blocks were found. In other words, data is read until the affected sector returns to a position where data may be written to it. Caching of the data improves performance if a subsequent write operation is to user data in one of the sectors following the originally read sector. The access pattern of commands occur in sequential writes.

Obviously it is impractical in terms of cost to cache all data on the DASD units of a RAID installation using contemporary technology. To provide cost effective caching, the data selected for caching must exhibit a higher probability for access than other data on the disk array. The sectors in a track which has just been accessed as part of a read-modify-write operation exhibit such a higher probability of a follow-up access. Data accesses for a particular type of operation tend to be clustered in space. Such a phenomena has often been observed and is termed *spatial locality of reference.*

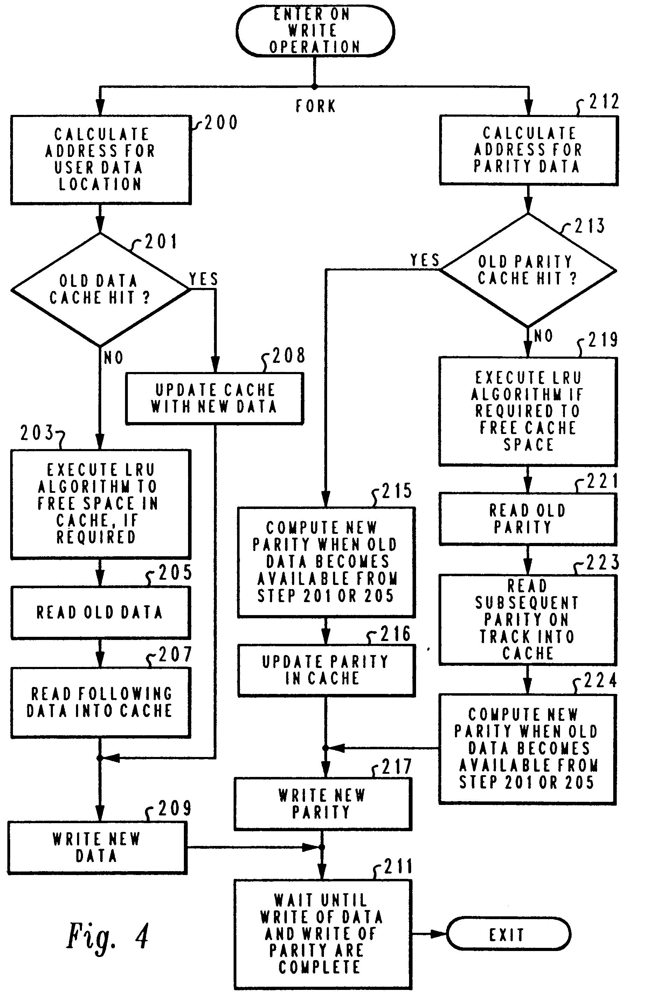

Figure 4 is a high level logical flow chart of a process implemented as part of supervisor program for local processor 25 for managing caching of user and parity data in accordance with the invention. The process includes two nonsynchronous partitions, one for handling user data and one for handling parity data. The partitions should be nonsynchronous in part because the DASD units where the parity data and user data reside need not be synchronous. The process is entered upon a write operation and immediately forks for the two nonsynchronous partitions. Step 200 provides for calculation of the address of the user data on disk. At step 201 it is determined if the address calculated at step 200 corresponds to a copy of data which has been cached. If not, the NO branch is taken to step 203 where an LRU algorithm is executed to free locations in cache (if required) to receive user data. At step 205 the data in the sector calculated at step 200 is read, and made available to the computational step 215, described below. At step 207 the data in the sectors following the sector just read are also read and stored in buffer 27. A cache entry is generated identifying the data by address range and the current system time is applied to the entry as a time stamp. At step 209 the new data is written over the existing data in the sector calculated in step 200. Next, step 211 is executed, representing a wait until both the write of step 209 and the write of step 217 are completed. With execution of step 211 notice of completion may be provided to a host machine. While the steps of reading old data (205) and reading following data into each (207) are shown as logically distinct, the controller presents the operations as a single request.

If at step 201 it is determined that user data for the sector calculated in step 200 is currently in cache, the calculating step 215 is immediately notified (e.g. by setting of a flag and a pointer to a cache location) of the availability of the old user data. Steps 203, 205 and 207 are skipped. Step 208 along the YES branch from step 201 provides for updating the cache with the new data to maintain cache coherency and the write operation of step 209 is then carried out.

Returning to the program fork and following the branch for the second partition, step 212 is executed to calculate a parity address for the stripe to which the user data belongs. At step 213 it is determined if the parity address corresponds to an entry in the parity cache table 31. If it does, processing advances to step 215 for calculation of replacement parity. Once replacement parity data is available the parity data in cache 27 is updated (step 216) . Step 217 is then executed to write the new parity. Step 211 follows as described above.

If no parity data cache hit was detected at step 213, step 219 provides execution of an LRU algorithm to free space in cache for parity data from a track, if required. Next, step 221 is executed to read the parity data at the sector identified from step 212. Next, step 223 is executed to read the remainder of the parity data on the track where the sector read in step 221 is located. The remainder parity data is placed in cache and an entry in parity cache table 31 is made. Next, step 224 is executed computer the new parity, once the old user data becomes available at step 201 or step 205. After the new parity data has been calculated processing advances to step **217** as described above.

In the above discussion it has been assumed that data not in cache which is identified in a write command is not read into cache. Similarly the parity data for the stripe associated with that data is not read into cache either. It should be now apparent that such user and parity data can readily be stored in cache if desired, or if locality of reference studies indicate that recurring accesses are likely to be made to a sector once accessed.

The invention provides opportunistic reading of data on any track of a RAID levels 4 or 5 which is accessed for a read-modify-write operation as the result of a write command received from a host data processing system. This provides for reading data which has a higher than random probability of being accessed for a follow on read-modify-write operation during a period which would otherwise be likely lost to disk operation.

While the invention has been particularly shown and described with reference to a preferred embodiment, it will be understood by those skilled in the art that various changes in form and detail may be made therein without departing from the scope of the invention as defined by the appended claims.

**Claims**

1. A mass storage device for a data processing system, comprising:

a plurality N disk drives (41A, 41B, 41C, 41D) operable as a logical unit each drive including at least one data recording disk comprising a plurality of tracks divided into sectors for storing data, wherein a group of sectors comprise at least one sector of user data from each of N-1 of the N disk drives and at least one sector on one of the N disk drives for storing parity data generated across the user data stored on the group of sectors; and

a storage controller (17) connected to the disk drives, responsive to an exogenous command to write user data to at least a first designated sector in the group of sectors for reading existing user data from all sectors on the track including the designated sector and existing parity data from all sectors on a track on a disk drive including a sector belonging to the group of sectors.

2. A mass storage device as claimed in claim 1, and further comprising:

a buffer (27) within the storage controller for receiving user data and parity data read from the disk drives;

means (25, 29, 28) within the storage controller responsive to the exogenous command for updating the parity data and writing the updated parity data and the user data back to the disk drives.

3. A mass storage device as claimed in claim 2, wherein the storage controller is responsive to a subsequent command to write user data to a specified location to determine if the buffer contains a copy of the user data currently stored at the specified location and a copy of the corresponding parity data; and if the buffer contains said data, updating the parity data using corresponding parity data, the stored user data and user data supplied with the subsequent command; and writing the updated parity data and the supplied data to the group of sectors.

4. A mass storage device as claimed in any preceding claim, wherein the mass storage system is a level four redundant array of independent disks in which all parity data is stored in one of the plurality N disk drives.

5. A mass storage device claimed in any of claims 1 to 3, wherein the mass storage system is a level five redundant array of independent disks.

6. A method of reading, writing and modifying data on a plurality of disk drives operating as a logical unit, comprising

receiving an exogenous write request;

responsive to the write request, reading data from a sector on a first disk drive;

further responsive to the write request, reading parity data from a sector on a second disk drive;

calculating new parity data from data received with the write request, the data read from the first disk drive and the parity data;

during a rotational latency period between successive accesses of the sector on the first disk drive and the sector on the second disk drive, prefetching data and parity data from the first and second disk drives respectively;

upon conclusion of the rotational latency period, writing the data received with the write request and the new parity data to the first and second disk drives, respectively; and

retaining the prefetched data and redundant data for use in calculating new parity data for a subsequent read-write-modify operation.

7. A method as claimed in claim 6 and further comprising:

receiving a subsequent exogenous write command;

responsive to the subsequent write command, determining if data associated with the subsequent write command represents modification of data read during the rotational latency period;

if so, calculating updated parity data from parity data read during the rotational latency period; and

writing the data received with the subsequent write command and the updated parity data to the first and second disk drives, respectively.

8. A data processing system, comprising:

means (13) for generating write requests;

a plurality of disk drives (41A, 41B, 41C, 41D) operating as a logical unit;

means responsive to the write request for reading data from a sector on a first of the plurality of disk drives;

means further responsive to the write request for reading parity data from a sector on a second of the plurality of disk drives;

means for calculating new parity data from data received with the write request, the data read from the first disk drive and the parity data;

means operative during rotational latency periods between periods of successive access to the sector and the first disk drive and the sector on the second disk drive for prefetching data and parity data from the first and second disk drives, respectively;

means responsive to completion of the rotational latency periods for writing the data received with the write request and the new parity data to the first and second disk drives, respectively; and

means for retaining the prefetched data and parity data for use in calculating new parity data for a subsequent read-write-modify operation.

9. A data processing as claimed in claim 8 and further comprising:

means responsive to the write command for determining if data associated with the subsequent write command represents modification of data read during the rotational latency period;

means responsive to an affirmative determination for calculating updated parity data from parity data read during the rotational latency period; and

means for writing the data received with the subsequent write command and the updated parity data to the first and second disk

drives, respectively.

Fig. 1

*Fig. 2*
*PRIOR ART*

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,Y | US-A-5 309 451 (NOYA ET AL.)<br>* abstract *<br>* column 2, line 20 - line 28 *<br>* column 3, line 16 - line 24 *<br>* column 4, line 15 - line 21 *<br>* column 5, line 44 - line 49 *<br>--- | 1-9 | G06F12/08<br>G06F11/10 |
| Y | EP-A-0 108 651 (STORAGE TECHNOLOGY CORPORATION)<br>* abstract *<br>* page 4, line 28 - page 5, line 1 *<br>* page 7, line 18 - page 8, line 10 *<br>--- | 1-5 | |
| Y | EP-A-0 452 019 (DIGITAL EQUIPMENT CORPORATION)<br>* abstract *<br>* page 2, line 45 - line 48 *<br>* page 3, line 32 - line 35 *<br>* page 4, line 14 - line 18 *<br>--- | 6-9 | |
| A | EP-A-0 573 308 (COMPAQ COMPUTER CORPORATION)<br>* abstract *<br>* column 3, line 24 - line 50 *<br>* column 6, line 49 - column 7, line 16 *<br>* column 11, line 21 - line 26 *<br>* column 17, line 26 - line 45 *<br>* column 20, line 17 - line 27 *<br>* figure 2 *<br>--- | 1,6,8 | TECHNICAL FIELDS SEARCHED (Int.Cl.6)<br><br>G06F |
| A | EP-A-0 556 945 (TANDEM COMPUTERS INCORPORATED)<br>* abstract *<br>* column 3, line 17 - line 51 *<br>* column 7, line 3 - line 15 *<br>* column 11, line 34 - column 12, line 12 *<br>------ | 1,6,8 | |

The present search report has been drawn up for all claims

| Place of search | Date of completion of the search | Examiner |
|---|---|---|
| BERLIN | 6 April 1995 | Masche, C |